# EUROPEAN PATENT SPECIFICATION

(11) **EP 3 279 022 B1**
(45) Date of publication and mention of the grant of the patent: **03.07.2019**
(21) Application number: 16425082.1
(22) Date of filing: 04.08.2016
(51) Int. Cl.: B60K 15/04, F16K 24/00, B60K 15/035, B60K 15/03

(54) **VALVE ASSEMBLY FOR FUEL TANKS OF VEHICLES**
VENTILANORDNUNG FÜR KRAFTSTOFFTANKS VON FAHRZEUGEN
ENSEMBLE DE SOUPAPE POUR RÉSERVOIRS DE CARBURANT DE VÉHICULES

(43) Date of publication of application: 07.02.2018
(73) Proprietor: F.A.R.M.A. S.r.l. Fabbrica Accessori Ricambi Moto e Auto, 40059 Frazione Fossatone-Medicina (BO) (IT)
(72) Inventor: Poma, Armando, 40060 Dozza BO (IT)
(74) Representative: Modiano, Micaela Nadia

(56) References cited:
- US-A- 4 685 584
- US-A- 4 716 920

## Description

The present invention relates to a valve assembly for fuel tanks of vehicles.

As is well known, the fuel tanks of motor vehicles are accessed by way of a filler neck, i.e. a tube that is provided with, at the opposite end from the fuel tank, an externally-facing end portion, at an opening or at a recess provided along the bodywork.

By means of to the filler neck, it is thus possible to execute the periodic refueling of fuel, simply by inserting the nozzle of the fuel pump therein.

According to equally well-known implementation solutions, the refueling can occur only after temporarily removing a fuel cap which is usually arranged so as to close the end portion of the filler neck.

Nowadays, the strict safety regulations in force, and also the increasingly demanding needs of customers, mean that the fuel cap of motor vehicles (be they cars, trucks, semi-trailer trucks, or so forth) plays a very delicate role, while at the same time posing complex problems for their makers.

In more detail, it should be noted that each fuel cap is provided with a respective valve assembly which is not easy to design and dimension, and which performs its functions when the respective fuel cap is arranged so as to close the filler neck, and which today is absolutely necessary in order to meet the requirements of regulatory bodies and customers.

First of all in fact, the valve assembly usually has to ensure the passage (to the fuel tank) of a volume of air equal to the maximum volume of fuel that can be consumed by the engine.

A fuel cap having a pressure-vacuum valve assembly is disclosed in US 4,716,920. Furthermore, the valve assembly has to stop the spontaneous evaporation of the fuel, which can sometimes occur, especially when the vehicle is stopped, in the event of an unwanted rise of the pressure level of the air inside the fuel tank. If such a rise occurs, the valve assembly has to allow the temporary outflow of air, thus restoring optimal pressure levels.

It should be noted likewise that if adequate measures are not taken to allow the outflow of air, in the event of an increase of the internal pressure level, another unwanted phenomenon can occur over time in addition to the spontaneous evaporation.

In fact, the thrust exerted by the compressed air against the walls of the fuel tank can produce a bulge in the latter. This is an event that is decidedly to be avoided, both because it is utterly unattractive and also because it is potentially hazardous.

At the same time, safety regulations require that measures be taken on every vehicle to prevent the accidental outflow of fuel from the fuel tank, in the event of the vehicle overturning (obviously in order to prevent explosions and/or fire in the event of an accident).

In order to observe such regulations, and therefore guard against the danger that, under the thrust of the fuel (which in an overturned vehicle presses against the fuel cap), the valve assembly could give way and allow the fuel to flow out, especially in high-capacity fuel tanks (the ones used on semi-trailer trucks for example), valves need to be adopted that are particularly robust and significantly large.

This way, however, the valve assembly is found to be rather insensitive to increases in pressure of lower intensity (such as pressure increases that cause spontaneous evaporation) and it allows the outflow of air (for the reasons discussed previously) only when the pressure reaches significantly high levels, thus keeping the internal space of the fuel tank isolated under all other conditions.

Such embodiment is therefore not without drawbacks.

In fact, the contrasting needs described above, especially in large, high-capacity fuel tanks, lead to the adoption of valve assemblies that do not effectively guard against spontaneous evaporation and bulging, insofar as they deploy to allow the free passage of air only upon reaching very high pressure levels (as mentioned, because otherwise they would not be able to keep the filler neck closed if the vehicle is overturned).

Therefore in order to guard at least against the bulging hazard, various countermeasures are adopted, such as for example thickening the walls of the fuel tank (with consequent, and unwanted, increase of the costs and of the overall weight) and/or providing stiffening ribs/ridges, inside the fuel tank or applied along the walls (which in any case is costly and involves not a few complications in construction).

Precisely because of the costs and the complications that they involve, such contrivances are found to be only partially satisfactory and/or are now seen as inadequate by the customers of today, who are increasingly demanding.

It should likewise be noted that the same drawbacks arise in those implementation solutions, just as well known, in which the contrasting needs explained up to now have to be met by a valve assembly that is installed on a ventilation tube separate from the filler neck, with the latter closed by a fuel cap that is of simpler construction.

The aim of the present invention is to solve the above mentioned problems, by providing a valve assembly for fuel tanks of vehicles that prevents the outflow of fuel in the event of overturning the vehicle, while at the same time ensuring an adequate outflow of the air from the fuel tank and therefore guarding against or at least limiting the hazard of bulging and/or of spontaneous evaporation.

Within this aim, an object of the invention is to provide a valve assembly (and/or a fuel cap) in which the danger of outflow of the fuel is guarded against or at least limited when the vehicle is appreciably inclined with respect to the horizontal plane.

Another object of the invention is to provide a valve assembly (and/or a fuel cap) that allows the entry of a volume of air equal to the maximum volume of fuel that can be consumed by the engine.

Another object of the invention is to provide a valve assembly that makes it possible to keep the weight and the cost of the fuel tank low.

Another object of the invention is to provide a valve assembly that ensures a high reliability of operation, while meeting various and possibly contrasting requirements dictated by customers and/or by current regulations.

Another object of the invention is to provide a valve assembly that adopts an alternative technical and structural architecture to those of conventional solutions.

Another object of the invention is to provide a valve assembly that can be easily implemented using elements and materials that are readily available on the market.

Another object of the invention is to provide a valve assembly that is low cost and safely applied.

This aim and these and other objects which will become better apparent hereinafter are achieved by a valve assembly according to claim 1.

Further characteristics and advantages of the invention will become better apparent from the description of preferred, but not exclusive, embodiments of the valve assembly according to the invention, which is illustrated by way of non-limiting example in the accompanying drawings wherein:

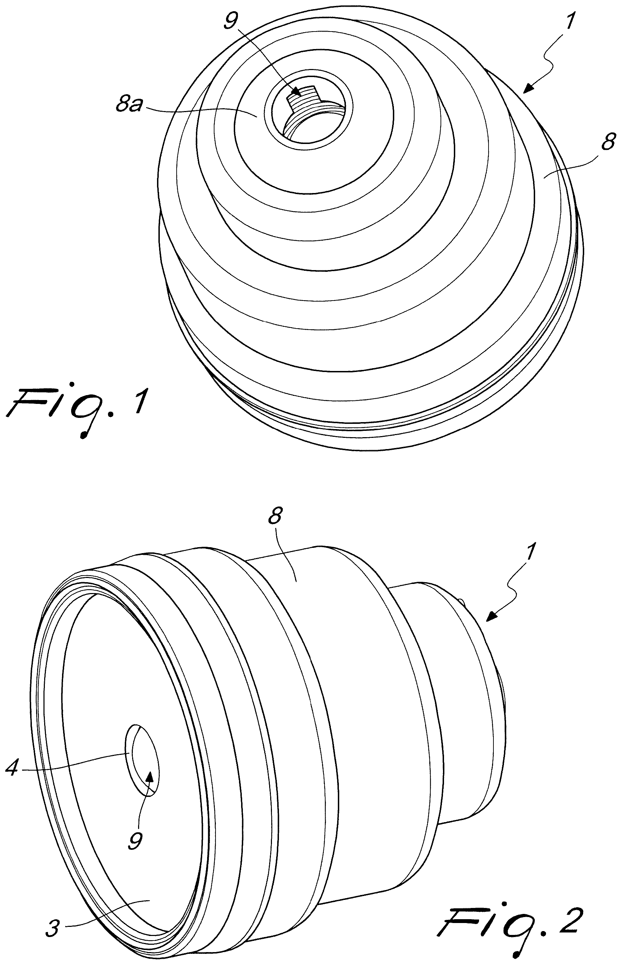

Figures 1 and 2 are two different perspective views of the valve assembly;
Figure 3 is a cross-sectional view of the valve assembly of Figures 1 and 2, taken along an axial plane;
Figure 4 is a perspective view of the valve assembly, cross-sectioned as in Figure 3;

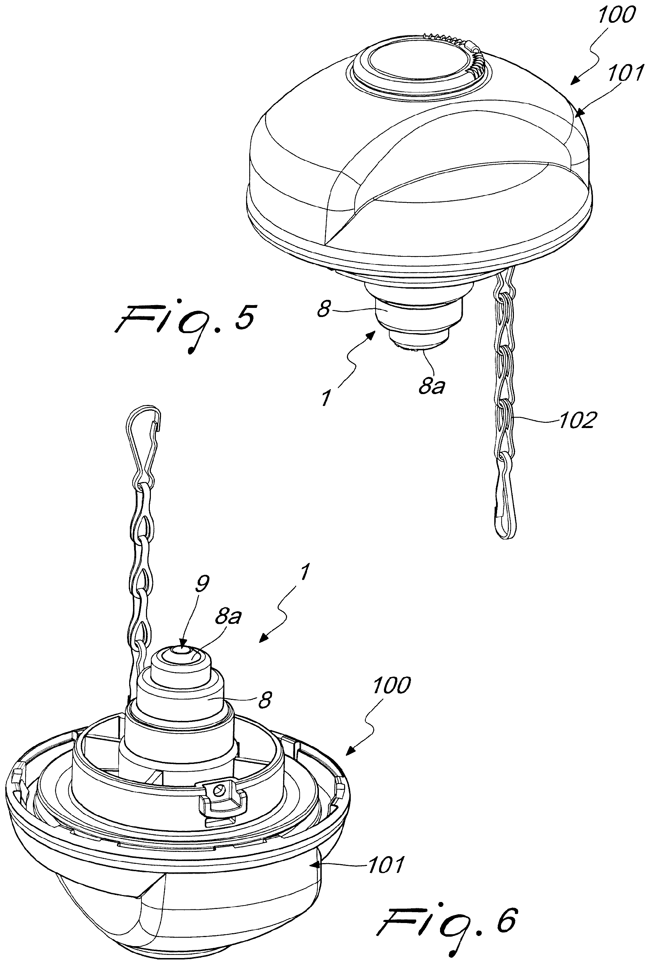

Figures 5 and 6 are perspective views, respectively from above and from below, of a first embodiment of a fuel cap with which the assembly of Figure 1 can be associated;
Figure 7 is a cross-sectional view of the fuel cap and of the assembly of Figure 5, taken along an axial plane;
Figure 8 is a cross-sectional view of the fuel cap and of the assembly of Figure 5, taken along an axial plane, and showing the coupling to a filler neck;

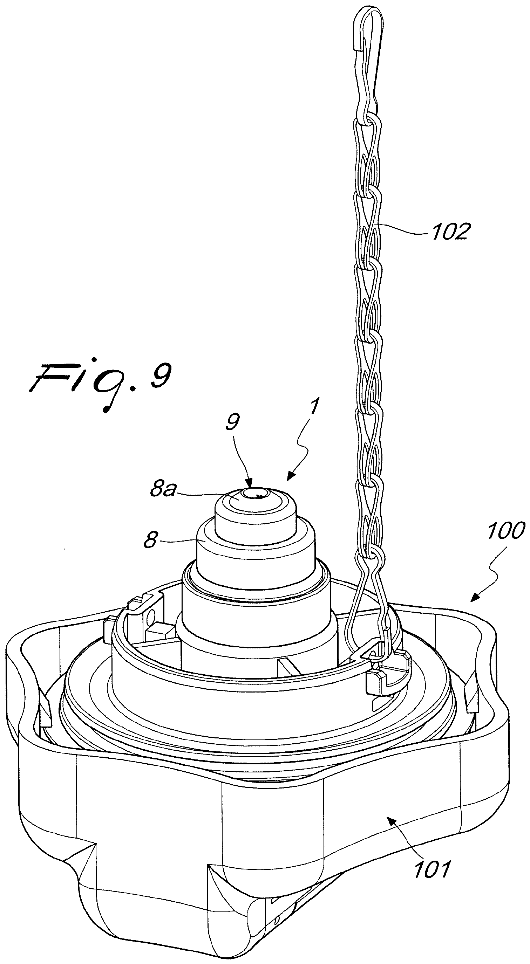

Figure 9 is a perspective view from below of a second embodiment of a fuel cap with which the assembly of Figure 1 can be associated;
Figure 10 is a cross-sectional view of the fuel cap and of the assembly of Figure 9, taken along an axial plane.

With reference to the figures, the reference numeral 1 generally designates a valve assembly for fuel tanks of vehicles.

In this regard, it should be noted from this point onward that the valve assembly 1 is typically intended to close fuel tanks of motor vehicles. In particular, the valve assembly 1 is found to be maximally useful for trucks, semi-trailer trucks, earth-moving machines and other large vehicles (with similarly large fuel tanks), but it can also be used for cars and other vehicles, while remaining within the scope of protection claimed herein.

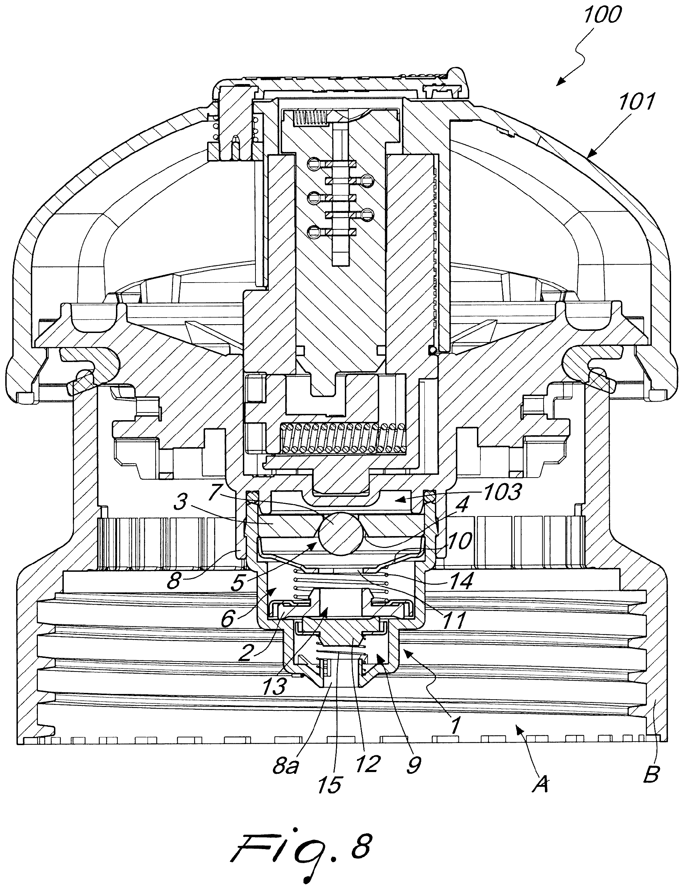

The valve assembly 1 can be arranged, in a respective operating configuration, along a communication route A between the fuel tank of a vehicle and the outside environment. In this regard, it should be noted that such communication route A can be chosen to be of the type of a filler neck B of the fuel tank (as shown schematically in the accompanying Figure 8), a ventilation tube of the fuel tank, and the like.

As is known, the filler neck B is connected to the fuel tank of the vehicle in order to enable the refueling thereof, which can be done by inserting the dispenser nozzle therein.

The assembly 1 can therefore be arranged along the filler neck B in a first embodiment in which, in ways which will be better explained below, the assembly 1 cooperates with a fuel cap 100, which in turn is arranged at the end portion of the filler neck B.

Alternatively, the assembly 1 can be arranged along the ventilation tube which, in some fuel tanks, provides the connection between the fuel tank and the outside environment, with the fuel cap simply performing the function of (removably) closing the filler neck B.

It should be noted therefore that both of the applications of the assembly 1 (and other, similar applications) are covered by the scope of protection claimed herein (in the latter, the fuel cap 100 fitted with the assembly 1 is moreover included).

The valve assembly 1 comprises at least one first diaphragm 2 which is usually arranged so as to close the communication route A.

The first diaphragm 2 can move elastically following an increase in the pressure level inside the fuel tank (above a preset threshold value), in order to allow the temporary exit of air from the fuel tank and the lowering of the pressure level.

Purely for the purposes of non-limiting example, such threshold value can correspond to an overpressure of 0.055±0.010 bar.

It should be noted that in the event of an increase in the pressure valve, the phenomenon (unwanted) of spontaneous evaporation can arise inside the fuel tank. Likewise, the thrust exerted by the compressed air against the walls of the fuel tank over time can produce a bulge (even more unwanted) in the walls.

However, the movement of the first diaphragm 2 allows air to exit from the fuel tank through the route A (to the outside environment), thus producing a decrease in the pressure level below the preset threshold and therefore restoring an optimal operative condition (in which moreover the first diaphragm 2 closes the route A).

According to the invention, the valve assembly 1 comprises at least one second diaphragm 3, which is also arranged so as to close the communication route A and which is in series with the first diaphragm 2 (as can be seen in the accompanying figures) at the opposite end from the fuel tank, when the assembly 1 is arranged in the operating configuration.

The second diaphragm 3 is provided with an opening 4 which can be closed by a respective occlusion element 5.

In fact, the occlusion element 5 is usually free to move in a space 6 which is comprised at least between the first diaphragm 2 and the second diaphragm 3, but it automatically positions itself so as to close the opening 4 when the space 6 is at least partially filled by the fuel that is usually contained in the fuel tank.

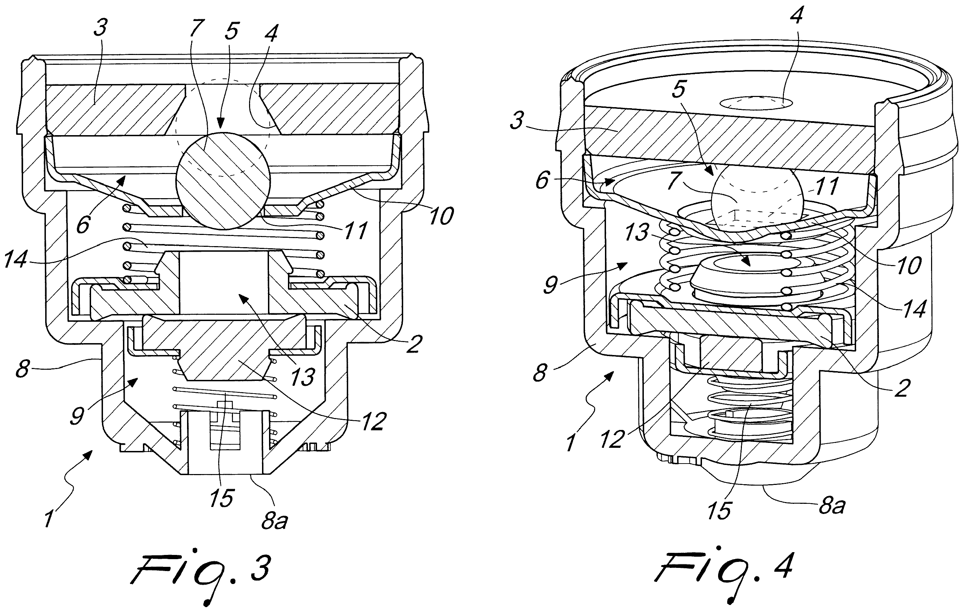

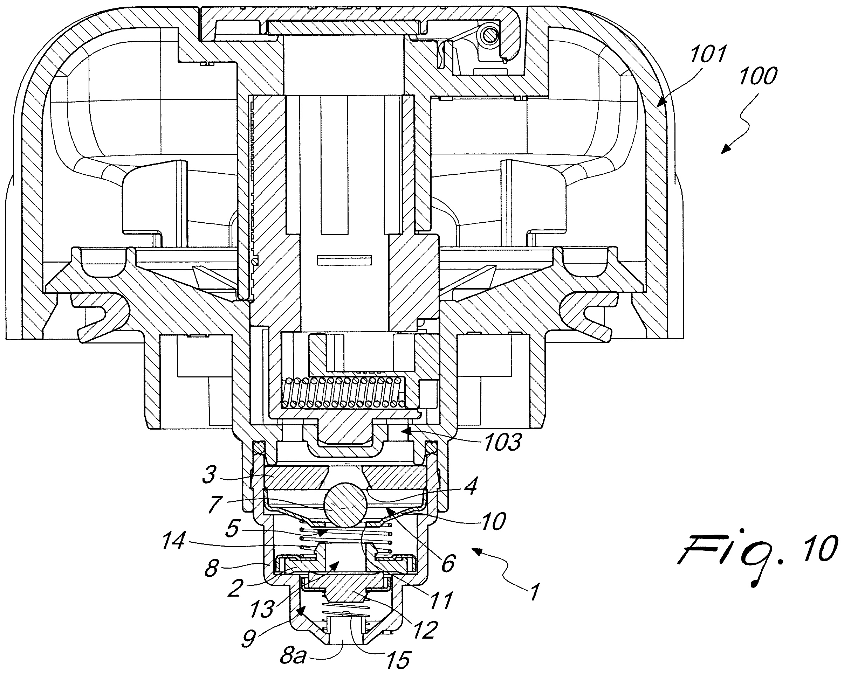

In the accompanying Figure 10, which shows a possible embodiment of the fuel cap 100 with which the assembly 1 is associated, as in the Figures 3 and 4, the element 5 is shown with a continuous line when it is in a (generic) position inside the space 6 (to represent the normal conditions of operation), while it is shown with a dotted line to indicate the position in which it closes the opening 4.

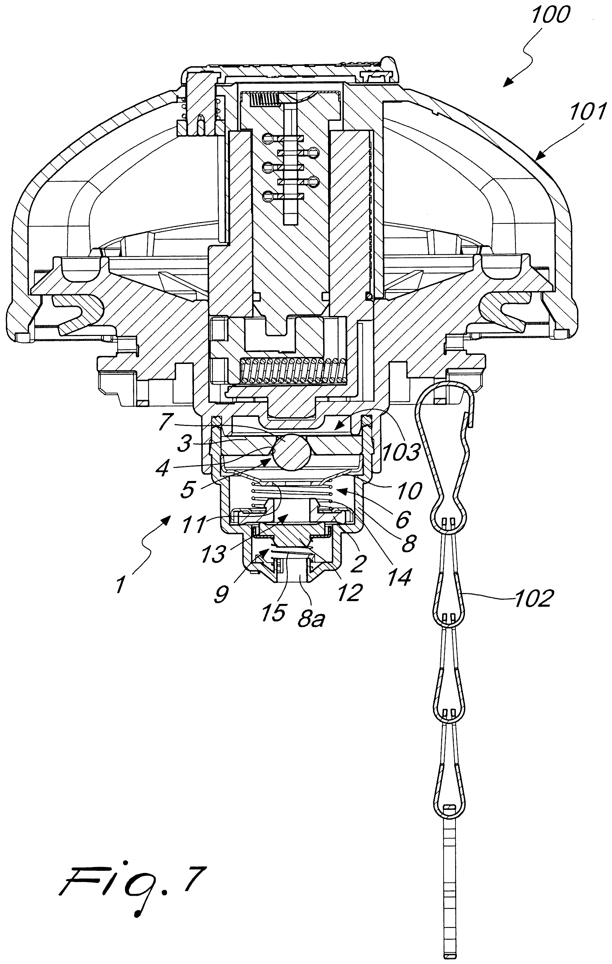

However, in Figures 7 and 8, which show another embodiment of the fuel cap 100, the element 5 is shown, with a continuous line, only in the position in which it closes the opening 4.

It should be noted that under normal conditions, thanks to the arrangement chosen for the first diaphragm 2 and the second diaphragm 3, and in general for the assembly 1, the space 6 is not affected in any way by the fuel contained in the fuel tank, since the communication route A (the filler neck B and/or the ventilation tube) is at a higher vertical height than that of the fuel tank. Since the second diaphragm 3 is arranged in series with the first diaphragm 2 on the opposite side from the fuel tank, under normal conditions the second diaphragm 3 is effectively above the first diaphragm 2 and the occlusion element 5 is spaced apart (by gravity) from the opening 4.

Conversely, in the event of overturning the vehicle (completely, i.e. 180°, or partially), the fuel tank can come to be at a higher vertical height than that of the route A, or in any case than that of the assembly 1. In such case therefore, by gravity the fuel usually contained in the fuel tank can spill into the route A and from there flow into the assembly 1: in such an eventuality, under the thrust of the fuel (or even simply as a result of gravity) the occlusion element 5 is brought automatically (and rapidly) to close the opening 4, thus impeding the fuel from pouring out.

In a practical and simple manner therefore, the invention ensures the observance of the regulations that require the adoption of measurements aimed at preventing the exit of fuel in the event of overturning the vehicle.

At the same time, in the event of a simple increase in pressure of the air inside the fuel tank, the element 5 does not obstruct the opening 4 (owing to gravity, it remains below, in the space 6) and therefore it does not impede the necessary exit of air, when the first diaphragm 2 is moved.

It should be noted therefore that the invention achieves the set aim and objects, since it makes it possible to meet the regulations on overturning without the adoption of very large valves with low sensitivity and therefore, unlike the known solutions, without leading to phenomena of spontaneous evaporation and/or bulging of the fuel tank.

In particular, while not ruling out other implementation choices, in the preferred embodiment (shown purely for the purposes of example in the accompanying figures), the opening 4 is substantially circular, while the occlusion element 5 is constituted substantially by a ball 7. Precisely in order to be capable of occluding the opening 4 when the fuel originating from the fuel tank flows into the space 6, the ball 7 has a radius that is larger than the radius of the opening 4.

In an embodiment of significant practical interest, which is shown in the accompanying figures by way of non-limiting example of application of the invention, the assembly 1 comprises a substantially axially symmetric shell 8, which is hermetically inserted along the communication route A. In more detail, while not ruling out other implementation options which in any case remain within the scope of protection claimed herein, the shell 8 can be arranged hermetically in a corresponding seat of the fuel cap 100 (as will be better explained below and as illustrated in the accompanying figures), which is intended to be directed toward the filler neck B, in the operating configuration.

In this manner, when the fuel starts to flow through the filler neck and so reaches the fuel cap 100, following the overturning of the vehicle, the fuel immediately strikes the assembly 1, and the occlusion element 5 can thus immediately perform its function, described in the foregoing paragraphs, so preventing the fuel from affecting the rest of the fuel cap 100.

Alternatively, the shell 8 can be hermetically inserted directly along the ventilation tube of the fuel tank.

With further reference to the embodiment introduced just now, which has the shell 8, the first diaphragm 2 and the second diaphragm 3 are arranged (in series, as already noted) within a through channel 9; the channel 9 is axially provided inside the shell 8 and is connected to the route A (they are effectively coaxial), with the first diaphragm 2 arranged closer to the fuel tank than the second diaphragm 3, when the assembly 1 is arranged in the operating configuration.

Therefore, in the embodiment introduced just now, illustrated in the accompanying figures, the first diaphragm 2 and/or the second diaphragm 3 (when the ball 7 is occluding the opening 4) close the route A since they close the channel 9, which in turn is inside and coaxial to the route A, into which the shell 8 is (directly or indirectly) hermetically inserted.

Conveniently, and as can be seen from the accompanying figures, at least the edge of the opening 4 directed toward the first diaphragm 2 (or the entire surface delimiting the opening 4) has a flaring that defines a guiding portion for the occlusion element 5.

Effectively, the surface delimiting the opening 4 is frustum-shaped, with a radius that decreases progressively as the distance from the space 6 containing the ball 7 increases.

In this manner, the flaring enables the facilitated re-closing of the opening 4 when the space 6 is at least partially filled by the fuel that is usually contained in the fuel tank.

This is found to be of particular interest when the vehicle is not completely (180°) overturned, but is only partially inclined (as can evidently happen in the event of an accident, or for example for excavators, if working on steep gradients). The flaring in fact favors the optimal placement of the ball 7 (or other occlusion element 5) in the opening 4, even when the fuel only partially fills the space 6 or when, following partial overturning, the second diaphragm 3 is not horizontally arranged completely below the first diaphragm 2 (as happens in a 180° overturning).

In a first embodiment, the space 6, within which the element 5 is free to move, is effectively constituted by the entire portion of channel 9 comprised between the first diaphragm 2 and the second diaphragm 3.

In the preferred embodiment, shown purely for the purposes of example in the accompanying figures, the valve assembly 1 comprises a dividing baffle 10, variously shaped according to the specific requirements, which is interposed between the first diaphragm 2 and the second diaphragm 3.

In such preferred form therefore, it is the baffle 10, with the second diaphragm 3, that delimits the space 6. The baffle 10 has a passage port 11 for air and fluids in general (in order to allow obviously the exit of air in the event of an increase in the pressure level in the fuel tank).

In order to prevent the accidental closure of the port 11, which would prevent the passage of air, the port 11 has a different shape from that of the occlusion element 5: in this manner, even if the element 5 is pushed against the baffle 10 and therefore into the port 11, at least some of the latter remains free, allowing the passage of air and fluids in general.

It should be noted moreover that in the embodiment shown in the accompanying figures, under normal conditions the element 5 will tend to fall into the port 11, owing to gravity: this in no way represents a problem, precisely because of the choice to allow in any case the passage of air through the port 11, by adopting a different shape to that of the ball 7.

In particular, the port 11 will be shaped so that it has a shape chosen from a square (as in the accompanying figures) and a star. The possibility is not ruled out however of adopting different shapes (also as a function of the shape chosen for the occlusion element 5) which in any case are chosen to be such as to prevent the element 5 from dovetailing into the port 11.

Conveniently, the valve assembly 1 comprises at least one third diaphragm 12, which is arranged in series with the first diaphragm 2 on the opposite side from the second diaphragm 3. The third diaphragm 12 is usually arranged so as to close a through orifice 13 which is provided along the first diaphragm 2.

The third diaphragm 12 can move elastically following a decrease in the pressure level inside the fuel tank (below a preset limit value), in order to allow the temporary inflow of air into the fuel tank and the raising of the pressure level.

Purely for the purposes of non-limiting example, such limit value can correspond to a decrease in pressure of 0.015±0.010 bar.

Even more specifically, the third diaphragm 12 is arranged inside the channel 9 and is usually kept pressed, elastically, against the first diaphragm 2 on the opposite side with respect to the second diaphragm 3, for the closure of the orifice 13.

Effectively, the movement of the third diaphragm 12 (in the opposite direction to the direction in which the first diaphragm 2 is allowed to move) occurs when conditions arise that are the opposite to those that result in the movement of the first diaphragm 2: while the latter diaphragm moves when the pressure of the air inside the fuel tank rises (in order to let air exit from the fuel tank), the third diaphragm 12 moves when the pressure of the air falls (with the first diaphragm 2 keeping the channel 9 closed) in order to allow the passage of air through the orifice 13 (in this case, toward the fuel tank).

It should be noted that the transverse space occupation of the third diaphragm 12 is chosen to be sufficiently high to obstruct the orifice 13 but lower than the transverse cross-section of the channel 9, in order to allow the exit of air when the first diaphragm 2 moves.

The third diaphragm 12 thus makes it possible to introduce volumes of air corresponding to the volume of fuel consumed during the operation of the vehicle (up to a volume of air that corresponds to the maximum amount of fuel that can be consumed), thus enabling the assembly 1 to meet a further requirement that is often expressed by the market (obviously without affecting the functionalities described previously).

In the preferred, but not limiting, embodiment of the application of the invention, the first diaphragm 2 is usually kept so as to close the route A (of the channel 9) by a first helical spring 14, which is coupled directly or indirectly, at the opposite end, to the shell 8.

More specifically, in the preferred embodiment the first spring 14 is fixed, at the opposite end from the first diaphragm 2, to the dividing baffle 10.

With further reference to the preferred, non-limiting embodiment of the application of the invention, the third diaphragm 12 is kept pressed against the first diaphragm 2 by a second helical spring 15, which is coupled at the opposite end to the axial end 8a of the shell 8 which is directed toward the fuel tank at least in the operating configuration.

In any case it should be noted that both the first diaphragm 2 and the third diaphragm 3 can interact with springs of other types, or other elastic elements, while remaining within the scope of protection claimed herein.

As noted in the foregoing pages, the present invention also relates to a closure stopper 100 for fuel tanks of vehicles (in the accompanying Figures from 3 to 10, the assembly 1 is shown in relation to the application that associates them with stoppers 100, of which two examples of implementation are given, purely for the purposes of non-limiting example of the application of the invention).

For the type of vehicles for which the fuel cap 100 can be used, considerations given above for the assembly 1 undoubtedly apply.

The fuel cap 100 comprises a main body 101, which can be arranged removably at the external end portion of the filler neck B of the fuel tank of a vehicle (as in Figure 8).

In this manner, the fuel cap 100 (in cooperation with the assembly 1) usually keeps the filler neck B and the fuel tank closed, but it can likewise be temporarily removed, in order to allow refueling.

In order to prevent the loss of the fuel cap 100, when it is temporarily removed or in other possible circumstances, the body 101 is provided with a chain 102, which can be anchored to the body of the vehicle.

The fuel cap 100 therefore also comprises the assembly 1, which has the first diaphragm 2 and the second diaphragm 3 (and optionally one or more of the other peculiarities described in the foregoing pages).

The assembly 1 is in fact supported by the body 101 and is arranged, in the operating configuration, so as to close the filler neck B of the fuel tank, at its end portion.

It should be noted therefore that, in the application associating the assembly 1 with a fuel cap 100, the shell 8 of the assembly 1 is effectively hermetically inserted along the walls delimiting a duct 103, defined by the fuel cap 100, which connects the filler neck B (the route A) with the outside.

The entry and exit of air, in the ways allowed by the assembly 1, therefore occurs through the duct 103 of the fuel cap 100, which is arranged connected to the filler neck B through the channel 9.

It should likewise be noted that, apart from the peculiarity of the assembly 1, the fuel cap 100 and the body 101 can be of substantially known type: for example therefore, the shape structure of the body 101, the methods with which stable but removable coupling with the filler neck B is achieved, and any other contrivances in the fuel cap 100 (for example in order to allow locking and release with a key) can be chosen entirely similarly to the solutions already on the market and we will therefore not address them in this discussion.

The operation of the assembly (and of the fuel cap) according to the invention is thus evident from the foregoing discussion.

First of all in fact, it should be noted that the assembly 1 can be arranged along a communication route A (be it a filler neck B or a ventilation tube) between the fuel tank of a vehicle and the outside environment, thus defining an operating configuration in which access to the fuel tank, along with the entry and exit of fluids, is usually prevented.

If the assembly 1 is associated with the filler neck B, then in order to proceed with refueling, it is therefore possible to temporarily remove the fuel cap 100 that supports the assembly 1, in order to then insert the nozzle of the fuel dispenser into the end portion of the filler neck B.

When the assembly 1 is arranged in the operating configuration, it performs the useful functions described previously and therefore, in order to meet the various and contrasting demands dictated by the market and by regulatory bodies, under determined conditions it allows the exchange of air between the fuel tank and the outside environment (in one direction or in the other), while at the same time guarding against the danger that the fuel contained in the fuel tank could spill out, in the event of total and partial overturning of the vehicle.

In more detail, it has been seen that the first diaphragm 2, usually arranged so as to close the route A, can temporarily move elastically, when the pressure of the air in the fuel tank rises excessively (beyond a threshold value that is considered acceptable, as a function of which the corresponding components are designed and dimensioned). Thus, the air can travel the route A and exit, returning the pressure level within the acceptability threshold and causing the return of the first diaphragm 2 to the position closing the route A (of the channel 9).

In this manner, it is possible to guard against or at least limit the dangers of spontaneous evaporation of fuel and of bulging of the walls of the fuel tank (which can happen if the fuel cannot exit when the internal pressure rises).

At the same time, if the vehicle overturns (completely or partially) or is operating on very inclined terrain, the occlusion element 5, which is usually arranged in the space 6 so as to not interfere with the surrounding components, is automatically brought to close the opening 4 (thanks to the thrust of the fuel flowing up the pipeline or simply by gravity), thus preventing the transit of fluids, and of fuel in particular. Thus, the danger of the fuel spilling out is guarded against, a result that in known solutions (especially in very large fuel tanks) is obtained by resorting to very robust and very big valves, which however do not make it possible to promptly react to an increase in the pressure level of the air inside the fuel tank.

The assembly 1 according to the invention meets the contrasting needs explained above and combines the necessity to observe the regulations on overturning with the necessity to allow the exit of air in order to impede spontaneous evaporation and prevent bulging of the fuel tank.

Such result is obtained with a structurally simple solution (which involves the second diaphragm 3 and the opening 4, which can be closed by the ball 7, as well as the moveable first diaphragm 2), which does not require valves that are excessively robust and heavy-duty.

The ensuring of a correct behavior in the event of overturning, without incurring the risk of swellings of the fuel tank, achieves further important advantages: differently from known solutions in fact, the thickness of the walls of the fuel tank can be kept low (only sufficient for the mechanical seal), and stiffening ribs or ridges are not required, since there is no need to strengthen the fuel tank in order to prevent bulging.

This is evidently found to be of exceptional practical interest, since the fuel tank intended to operate with the assembly 1 (and/or the fuel cap 100) according to the invention offers, as a consequence of the low thickness and of the lack of ribs or ridges, low weight and low cost, certainly lower than those of the known solutions.

The scope of protection claimed herein is evidently understood to extend to the use of the assembly 1 for any type of fuel tank (for which the benefits afforded by the invention are in any case significant), but it should be noted that the possibility of keeping weight and costs down is undoubtedly most appreciated in vehicles that require large fuel tanks, such as trucks, semi-trailer trucks, earth-moving machines and other large vehicles.

Likewise, the shape of the fuel tank can also be freely chosen, without having to use shapes that ensure greater strength, other parameters remaining the same.

Moreover, the results achieved by the invention offer the possibility to extend the use of polymeric materials (cheaper and lighter) to larger fuel tanks as well, whereas until now it has been necessary to opt for other, stronger (metallic) materials, owing to the necessity of preventing bulging.

It should be noted finally that the third diaphragm 12 makes it possible to meet a further requirement (typically imposed by the market): when the pressure of the air drops below a preset limit value, the third diaphragm 12 elastically moves away from the first diaphragm 2, against which it is usually pressed, thus freeing the orifice 13, through which the outside air can enter the fuel tank, thus returning the pressure to optimal values (and in any case allowing the inflow of a volume of air equal to the volume of fuel that is progressively consumed).

In the embodiments illustrated, individual characteristics shown in relation to specific examples may in reality be substituted with other, different characteristics, existing in other embodiments.

In practice, the materials employed, as well as the dimensions, may be any according to requirements and to the state of the art.

Where the technical features mentioned in any claim are followed by reference numerals and/or signs, those reference numerals and/or signs have been included for the sole purpose of increasing the intelligibility of the claims and accordingly, such reference numerals and/or signs do not have any limiting effect on the interpretation of each element identified by way of example by such reference numerals and/or signs.

## Claims

1. A valve assembly for fuel tanks of vehicles, which can be arranged, in a respective operating configuration, along a communication route (A) between the fuel tank of a vehicle and the external environment, the route (A) being of the type of a filler neck (B) of the fuel tank, a ventilation tube of the fuel tank, and the like, and which comprises at least one first diaphragm (2) which is normally arranged so as to close the communication route (A) and is elastically movable following an increase in the pressure level inside the fuel tank, in order to allow the temporary exit of air from the fuel tank and the lowering of the pressure level, said valve assembly (1) comprising at least one flat, disc-shaped second diaphragm (3), which is arranged so as to close the communication route (A) in series with said first diaphragm (2) on the other side from the fuel tank, in said operating configuration, and which has an aperture (4) which can be closed by a respective occlusion element (5), which is normally free to move in a space (6) comprised at least between said first diaphragm (2) and said second diaphragm (3), and is automatically positionable so as to close said aperture (4), when said space (6) is at least partially filled by the fuel normally contained in the fuel tank, said valve assembly (1) comprising a substantially axially symmetric shell (8), which is hermetically insertable along the communication route (A), said first diaphragm (2) and said second diaphragm (3) being arranged inside a through channel (9), which is axially provided inside said shell (8) and connected to the route (A) in said operating configuration, with said first diaphragm (2) closer to the fuel tank with respect to said second diaphragm (3), whereby the valve assembly further comprises a dividing baffle (10), interposed between said first diaphragm (2) and said second diaphragm (3) and delimiting, with said second diaphragm (3), said space (6), said baffle (10) having a passage port (11) for air and fluids in general, said port (11) having a different shape from that of said occlusion element (5), in order to prevent the accidental closing of said port (11).

2. The valve assembly according to claim 1, **characterized in that** said opening (4) is substantially circular, said occlusion element (5) being constituted substantially by a ball (7) of greater radius than the radius of said opening (4).

3. The valve assembly according to one or more of the preceding claims, **characterized in that** at least the edge of said opening (4) which is directed toward said first diaphragm (2) has a flaring that defines a guiding portion for said occlusion element (5), for the facilitated closing of said opening (4) when said space (6) is at least partially filled by the fuel usually contained in the fuel tank.

4. The valve assembly according to claim 1, **characterized in that** said port (11) has a shape chosen from a square and a star.

5. The valve assembly according to one or more of the preceding claims, **characterized in that** it comprises at least one third diaphragm (12), which is arranged in series with said first diaphragm (2) on the other side from said second diaphragm (3), said third diaphragm (12) being normally arranged so as to close a through orifice (13) defined along said first diaphragm (2), said third diaphragm (12) being elastically movable as a result of a decrease in the pressure level inside the fuel tank, in order to allow the temporary entry of air into the fuel tank and the raising of the pressure level.

6. The valve assembly according to claim 5, **characterized in that** said third diaphragm (12) is arranged inside said channel (9) and is usually kept pressed, elastically, against said first diaphragm (2) on the opposite side from said second diaphragm (3), for the closure of said orifice (13).

7. The valve assembly according to one or more of the preceding claims, **characterized in that** said first diaphragm (2) is usually kept in position so as to close the communication route (A) by a first helical spring (14), which is coupled directly or indirectly, at the opposite end, to said shell (8).

8. The valve assembly according to claim 7, **characterized in that** said first spring (14) is fixed, at the opposite end from said first diaphragm (2), to said dividing baffle (10).

9. The valve assembly according to one or more of the preceding claims, **characterized in that** said third diaphragm (12) is kept pressed against said first diaphragm (2) by a second helical spring (15), which is coupled at the opposite end to the axial end (8a) of said shell (8) which is directed toward the fuel tank at least in said operating configuration.

10. A closure stopper for fuel tanks of vehicles, which comprises a main body (101) which can be removably arranged at the external end portion of the filler neck (B) of the fuel tank of a vehicle, and a valve assembly (1) according to one or more of the preceding claims, which is supported by said body (101) and can be arranged, in said operating configuration, so as to close the filler neck (B) of the fuel tank, at the end portion thereof.

## Patentansprüche

1. Ein Ventilaufbau für Kraftstofftanks von Fahrzeugen, der in einer entsprechenden Arbeitskonfiguration entlang einem Kommunikationsweg (A) zwischen dem Kraftstofftank eines Fahrzeugs und der äußeren Umgebung angeordnet sein kann, wobei der Weg (A) vom Typ eines Einfüllstutzens (B) des Kraftstofftanks, eines Belüftungsrohrs des Kraftstofftanks und dergleichen sein kann; und der mindestens eine erste Membran (2) umfasst, die normalerweise so angeordnet ist, dass sie den Kommunikationsweg (A) verschließt, und nach einer Erhöhung des Druckniveaus im Kraftstofftank elastisch beweglich ist, um den vorübergehenden Austritt der Luft aus dem Kraftstofftank und die Absenkung des Druckniveaus zu ermöglichen; wobei der Ventilaufbau (1) mindestens eine flache, scheibenförmige, zweite Membran (3) umfasst, die angeordnet ist, um in der Arbeitskonfiguration den Kommunikationsweg (A) in Reihe mit der ersten Membran (2) auf der anderen Seite vom Kraftstofftank aus gesehen zu verschließen, und die eine Öffnung (4) hat, welche mit einem entsprechenden Verschlusselement (5) verschlossen werden kann, das normalerweise frei ist, sich in einem Raum (6) mindestens zwischen der ersten Membran (2) und der zweiten Membran (3) zu bewegen, und automatisch positionierbar ist, um die Öffnung (4) zu verschließen, wenn der Raum (6) zumindest teilweise mit dem Kraftstoff gefüllt ist, der normalerweise in dem Kraftstofftank enthalten ist; wobei der Ventilaufbau (1) ein im Wesentlichen axialsymmetrisches Gehäuse (8) umfasst, das hermetisch entlang dem Kommunikationsweg (A) eingefügt werden kann; wobei die erste Membran (2) und die zweite Membran (3) innerhalb eines Durchgangskanals (9) angeordnet sind, der axial im Gehäuse (8) angebracht und in der Arbeitskonfiguration mit dem Weg (A) verbunden ist, wobei die erste Membran (2) dem Kraftstofftank näher ist als die zweite Membran (3), wobei der Ventilaufbau weiter eine Trennwand (10) umfasst, die zwischen der ersten Membran (2) und der zweiten Membran (3) angeordnet ist und mit der zweiten Membran (3) den Raum (6) begrenzt; wobei die Trennwand (10) eine Durchlassöffnung (11) für Luft und Fluide im Allgemeinen hat; wobei die Durchlassöffnung (11) eine andere Form hat als das Verschlusselement (5), um das versehentliche Schließen der Öffnung (11) zu verhindern.

2. Der Ventilaufbau gemäß Anspruch 1, **dadurch gekennzeichnet, dass** die Öffnung (4) im Wesentlichen kreisförmig ist, wobei das Verschlusselement (5) im Wesentlichen aus einer Kugel (7) besteht, die einen größeren Radius hat als die Öffnung (4).

3. Der Ventilaufbau gemäß einem oder mehreren der obigen Ansprüche, **dadurch gekennzeichnet, dass** mindestens der Rand der Öffnung (4), der der ersten Membran (2) zugewandt ist, eine konische Erweiterung hat, die zum leichteren Verschließen der Öffnung (4), wenn der Raum (6) zumindest teilweise mit dem Kraftstoff gefüllt ist, der normalerweise im Kraftstofftank enthalten ist, einen Führungsabschnitt für das Verschlusselement (5) bestimmt.

4. Der Ventilaufbau gemäß Anspruch 1, **dadurch gekennzeichnet, dass** die Durchlassöffnung (11) eine Form hat, die aus einem Quadrat und einer Sternform gewählt ist.

5. Der Ventilaufbau gemäß einem oder mehreren der obigen Ansprüche, **dadurch gekennzeichnet, dass** er mindestens eine dritte Membran (12) umfasst, die in Reihe mit der ersten Membran (2) auf der der zweiten Membran (3) entgegengesetzten Seite angeordnet ist, wobei die dritte Membran (12) normalerweise so angeordnet ist, dass sie eine Durchgangsöffnung (13) verschließt, welche entlang der ersten Membran (2) angeordnet ist; wobei die dritte Membran (12) infolge einer Absenkung des Druckniveaus im Kraftstofftank elastisch beweglich ist, um den vorübergehenden Eintritt von Luft in den Kraftstofftank und die Erhöhung des Druckniveaus zu ermöglichen.

6. Der Ventilaufbau gemäß Anspruch 5, **dadurch gekennzeichnet, dass** die dritte Membran (12) innerhalb des Kanals (9) angebracht ist und normalerweise zum Schließen der Öffnung (13) auf der der zweiten Membran (3) entgegengesetzten Seite elastisch gegen die erste Membran (2) gepresst gehalten wird.

7. Der Ventilaufbau gemäß einem oder mehreren der obigen Ansprüche, **dadurch gekennzeichnet, dass** die erste Membran (2) normalerweise von einer ersten Schraubenfeder (14), die am gegenüberliegenden Ende direkt oder indirekt mit dem Gehäuse (8) verbunden ist, in Position gehalten wird, um den Kommunikationsweg (A) zu verschließen.

8. Der Ventilaufbau gemäß Anspruch 7, **dadurch gekennzeichnet, dass** die erste Feder (14) an dem Ende, das der ersten Membran (2) gegenüberliegt, an der Trennwand (10) befestigt ist.

9. Der Ventilaufbau gemäß einem oder mehreren der obigen Ansprüche, **dadurch gekennzeichnet, dass** die dritte Membran (12) von einer zweiten Schraubenfeder (15), die am entgegengesetzten Ende mit dem axialen Ende (8a) des Gehäuses (8) verbunden ist, das mindestens in der Arbeitskonfiguration dem Kraftstofftank zugewandt ist, gegen die erste Membran (2) gepresst gehalten wird.

10. Ein Verschlussstöpsel für Kraftstofftanks von Fahrzeugen, der einen Hauptkörper (101) umfasst, welcher abnehmbar am äußeren Endabschnitt des Einfüllstutzens (B) des Kraftstofftanks eines Fahrzeugs angebracht sein kann, und einen Ventilaufbau (1) gemäß einem oder mehreren der obigen Ansprüche, der von dem Körper (101) getragen wird und in der Arbeitskonfiguration so angeordnet sein kann, dass er den Einfüllstutzen (B) des Kraftstofftanks am Endabschnitt desselben verschließt.

## Revendications

1. Ensemble de soupape pour des réservoirs de carburant de véhicules, qui peut être agencé, dans une configuration de fonctionnement respective, le long d'un trajet de communication (A) entre le réservoir de carburant d'un véhicule et l'environnement extérieur, le trajet (A) étant du type d'un goulot de remplissage (B) du réservoir de carburant, un tube de ventilation du réservoir de carburant et analogue, et qui comporte au moins un premier diaphragme (2) qui est normalement agencé de manière à fermer le trajet de communication (A) et est élastiquement mobile après une augmentation du niveau de pression à l'intérieur du réservoir de carburant, afin de permettre la sortie temporaire d'air à partir du réservoir de carburant et la baisse du niveau de pression, ledit ensemble de soupape (1) comportant au moins un deuxième diaphragme plat, en forme de disque (3), qui est agencé de manière à fermer le trajet de communication (A) en série avec ledit premier diaphragme (2) de l'autre côté par rapport au réservoir de carburant, dans ladite configuration de fonctionnement, et qui a une ouverture (4) qui peut être fermée par un élément d'occlusion (5) respectif, qui est normalement libre de se déplacer dans un espace (6) compris au moins entre ledit premier diaphragme (2) et ledit deuxième diaphragme (3), et peut être automatiquement positionné de manière à fermer ladite ouverture (4), lorsque ledit espace (6) est au moins partiellement rempli par le carburant normalement contenu dans le réservoir de carburant, ledit ensemble de soupape (1) comportant une coque sensiblement axialement symétrique (8), qui peut être hermétiquement insérée le long du trajet de communication (A), ledit premier diaphragme (2) et ledit deuxième diaphragme (3) étant agencés à l'intérieur d'un canal traversant (9), qui est axialement agencé à l'intérieur de ladite coque (8) et relié au trajet (A) dans ladite configuration de fonctionnement, ledit premier diaphragme (2) étant plus proche du réservoir de carburant par rapport audit deuxième diaphragme (3), en sorte que l'ensemble de soupape comporte en outre une cloison de séparation (10), intercalée entre ledit premier diaphragme (2) et ledit deuxième diaphragme (3) et délimitant, avec ledit deuxième diaphragme (3), ledit espace (6), ladite cloison (10) ayant un orifice de passage (11) pour de l'air et des fluides en général, ledit orifice (11) ayant une forme différente de celle dudit élément d'occlusion (5), afin d'empêcher la fermeture accidentelle dudit orifice (11).

2. Ensemble de soupape selon la revendication 1, **caractérisé en ce que** ladite ouverture (4) est sensiblement circulaire, ledit élément d'occlusion (5) étant pratiquement constitué d'une bille (7) de rayon supérieur au rayon de ladite ouverture (4).

3. Ensemble de soupape selon une ou plusieurs des revendications précédentes, **caractérisé en ce qu'**au moins le bord de ladite ouverture (4) qui est dirigé vers ledit premier diaphragme (2) a un évasement qui définit une partie de guidage pour ledit élément d'occlusion (5), pour la fermeture facilitée de ladite ouverture (4) lorsque ledit espace (6) est au moins partiellement rempli du carburant généralement contenu dans le réservoir de carburant.

4. Ensemble de soupape selon la revendication 1, **caractérisé en ce que** ledit orifice (11) a une forme choisie parmi un carré et une étoile.

5. Ensemble de soupape selon une ou plusieurs des revendications précédentes, **caractérisé en ce qu'**il comporte au moins un troisième diaphragme (12), qui est agencé en série avec ledit premier diaphragme (2) de l'autre côté par rapport audit deuxième diaphragme (3), ledit troisième diaphragme (12) étant normalement agencé de manière à obturer un orifice traversant (13) défini le long dudit premier diaphragme (2), ledit troisième diaphragme (12) étant élastiquement mobile en résultat d'une baisse du niveau de pression à l'intérieur du réservoir de carburant, afin de permettre l'entrée temporaire d'air dans le réservoir de carburant et l'augmentation du niveau de pression.

6. Ensemble de soupape selon la revendication 5, **caractérisé en ce que** ledit troisième diaphragme (12) est agencé à l'intérieur dudit canal (9) et est généralement maintenue pressé, élastiquement, contre ledit premier diaphragme (2) sur le côté opposé par rapport audit deuxième diaphragme (3), pour la fermeture dudit orifice (13) .

7. Ensemble de soupape selon une ou plusieurs des revendications précédentes, **caractérisé en ce que** ledit premier diaphragme (2) est généralement maintenu en position de manière à fermer le trajet de communication (A) par un premier ressort hélicoïdal (14), qui est couplé directement ou indirectement, au niveau de l'extrémité opposée, à ladite coque (8).

8. Ensemble de soupape selon la revendication 7, **caractérisé en ce que** ledit premier ressort (14) est fixé, au niveau de l'extrémité opposée audit premier diaphragme (2), à ladite cloison de séparation (10).

9. Ensemble de soupape selon une ou plusieurs des revendications précédentes, **caractérisé en ce que** ledit troisième diaphragme (12) est maintenue pressé contre ledit premier diaphragme (2) par un second ressort hélicoïdal (15), qui est couplé, au niveau de l'extrémité opposée, à l'extrémité axiale (8a) de ladite coque (8) qui est dirigée vers le réservoir de carburant au moins dans ladite configuration de fonctionnement.

10. Bouchon de fermeture pour des réservoirs de carburant de véhicules, qui comporte un corps principal (101) qui peut être agencé de manière amovible sur la partie d'extrémité externe du goulot de remplissage (B) du réservoir de carburant d'un véhicule, et un ensemble de soupape (1) selon une ou plusieurs des revendications précédentes, qui est supporté par ledit corps (101) et peut être agencé, dans ladite configuration de fonctionnement, de manière à fermer le goulot de remplissage (B) du réservoir de carburant, au niveau de la partie d'extrémité de celui-ci.
